(19) **Europäisches Patentamt**
**European Patent Office**
**Office européen des brevets**

(11) **EP 3 688 518 B1**

(12) **FASCICULE DE BREVET EUROPEEN**

(45) Date de publication et mention de la délivrance du brevet:
**11.12.2024 Bulletin 2024/50**

(21) Numéro de dépôt: **18773809.1**

(22) Date de dépôt: **04.09.2018**

(51) Classification Internationale des Brevets (IPC):
**G02B 30/27** *(2020.01)* **H04N 13/305** *(2018.01)*
**H04N 13/366** *(2018.01)* **G02B 27/00** *(2006.01)*
**H04N 13/31** *(2018.01)*

(52) Classification Coopérative des Brevets (CPC):
**H04N 13/366; G02B 27/0093; G02B 30/27; H04N 13/305; H04N 13/31;** H04N 13/279

(86) Numéro de dépôt international:
**PCT/FR2018/052158**

(87) Numéro de publication internationale:
**WO 2019/063897 (04.04.2019 Gazette 2019/14)**

(54) **SYSTÈME ET PROCÉDÉ D'AFFICHAGE D'UNE IMAGE AUTOSTÉRÉOSCOPIQUE À 2 POINTS DE VUE SUR UN ÉCRAN D'AFFICHAGE AUTOSTÉRÉOSCOPIQUE À N POINTS DE VUE ET PROCÉDÉ DE CONTRÔLE D'AFFICHAGE SUR UN TEL ÉCRAN D'AFFICHAGE**

SYSTEM UND VERFAHREN ZUR DARSTELLUNG EINES AUTOSTEREOSKOPISCHEN 2-PERSPEKTIVEN-BILDES AUF EINEM AUTOSTEREOSKOPISCHEN N-PERSPEKTIVEN-ANZEIGEBILDSCHIRM UND VERFAHREN ZUR ÜBERWACHUNG DER ANZEIGE AUF EINEM DERARTIGEN ANZEIGEBILDSCHIRM

SYSTEM AND METHOD FOR DISPLAYING A 2-VIEWPOINT AUTOSTEREOSCOPIC IMAGE ON AN N-VIEWPOINT AUTOSTEREOSCOPIC DISPLAY SCREEN AND METHOD FOR MONITORING THE DISPLAY ON SUCH A DISPLAY SCREEN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.09.2017 FR 1758881**

(43) Date de publication de la demande:
**05.08.2020 Bulletin 2020/32**

(73) Titulaire: **Alioscopy**
**75020 Paris (FR)**

(72) Inventeurs:
• **ALLIO, Pierre**
**75020 Paris (FR)**
• **MAINGREAUD, Flavien**
**95450 Commeny (FR)**

(74) Mandataire: **Bringer IP**
**1, Place du Président Thomas Wilson**
**31000 Toulouse (FR)**

(56) Documents cités:
**EP-A1- 2 797 328       US-A1- 2006 170 764**
**US-A1- 2011 216 171       US-A1- 2017 127 050**

**Description**

**1. Domaine technique de l'invention**

L'invention concerne un système et un procédé d'affichage autostéréoscopique.

**2. Arrière-plan technologique**

L'autostéréoscopie est une technique permettant l'affichage d'images en relief sans exiger le port de lunettes spéciales de la part de l'observateur. Cette technique est connue en elle-même, en particulier des documents de brevets WO2006/024764, WO2014/041504, WO2013/140363, WO2014/016768 au nom du demandeur.

D'une manière générale, une image autostéréoscopique est constituée d'une pluralité de bandes d'images élémentaires imbriquées, correspondant chacune à des vues d'un même objet ou d'une même scène selon des points de vue différents. Un dispositif sélecteur, typiquement constitué par un réseau de lenticules cylindriques ou une barrière de parallaxe, est disposé devant l'écran d'affichage de manière à permettre la projection d'un couple d'images élémentaires correspondant à deux points de vue différents de la scène, respectivement vers les deux yeux de l'observateur, ce qui crée une impression de relief dans le cerveau de l'observateur.

L'un des inconvénients des techniques auto-stéréoscopiques connues réside dans le nombre important de points de vue qui sont nécessaires simultanément sur l'écran. En effet, contrairement aux technologies à lunettes où seuls deux points de vues sont nécessaires, l'autostéréoscopie nécessite un grand nombre de points de vue pour libérer l'observateur des contraintes de positionnement.

On peut considérer que dans le cadre de l'autostéréoscopie, c'est l'écran qui porte les lunettes. Il est connu qu'un bon compromis alliant une bonne résolution de l'écran, une qualité de l'image observée et une liberté de déplacement de l'observateur devant l'écran consiste à utiliser huit points de vue différents.

Le demandeur a déjà proposé un écran autostéréoscopique comprenant une matrice de pixels agencés par lignes et par colonnes, chaque pixel étant composé d'une pluralité de sous-pixels de couleurs différentes. L'écran est en outre surmonté d'un réseau de lenticules cylindriques identiques présentant chacune une focale configurée pour pouvoir renvoyer à l'infini les rayons lumineux qui proviennent de l'écran. La largeur des lentilles est approximativement égale à la largeur de 8 sous-pixels (dans la mesure où le demandeur préconise l'utilisation d'un seul sous-pixel par point de vue par lentille et par ligne horizontale au lieu d'un pixel). Cela étant, d'autres configurations sont possibles sans que cela ne modifie sensiblement l'effet procuré. Le pas du réseau de lenticules cylindriques est précisément calculé de telle sorte que l'observateur voit, à une distance prédéterminée de l'écran (dite distance de teinte plate, qui est par exemple fixée à 85cm), les images se succéder tous les 6,5cm (écart moyen entre les yeux, choisi comme base de calcul), grâce à l'effet loupe du réseau de lenticules.

Cet effet loupe résulte du fait qu'une lentille placée à la bonne distance (sa focale) grossit le sous-pixel qui se trouve dans l'alignement de son axe optique et de la pupille de l'oeil de l'observateur. Si la lentille grossit 8 fois, le sous-pixel vu à travers la lentille est perçu 8 fois plus large qu'il n'est en réalité et masque pour l'oeil qui en reçoit la lumière à travers cette lentille les 7 autres sous-pixels qui ne sont pas dans l'alignement décrit précédemment.

Ainsi, l'observateur ne perçoit qu'un huitième de la résolution de l'écran pour chaque oeil. Ces points associés pour former une image ou un point de vue sont tous grossis 8 fois horizontalement. Il reste les 7/8ème de la résolution pour y inscrire 7 autres points de vue selon la même méthode.

L'espace devant l'écran est alors divisé en zones de 52cm, appelées lobes, dans lesquelles on peut percevoir successivement les 8 points de vue tous les 6,5cm. Lorsque l'on quitte un lobe, on retrouve la succession des 8 points de vue identiques.

Ainsi, un observateur qui se déplace parallèlement au plan de l'écran à 85cm de celui-ci (dans le cas où la distance de teinte plate est fixée à 85 cm), de la position la plus à droite jusqu'à la position la plus à gauche voit avec un seul oeil les points de vue se succéder tous les 6,5cm en série de 8 formant un lobe et encore les même 8 formant le second lobe et ainsi de suite.

Les deux yeux de l'observateur étant écartés de 6,5cm en moyenne, lorsque l'oeil droit voit un point de vue *n* (*n* étant compris entre 1 et 8 dans le cas d'un écran à 8 points de vue), l'oeil gauche voit le point de vue complémentaire en *n-1* ou *n+1* et il perçoit une image en relief. Quand il bouge vers la gauche ou vers la droite, ses yeux changent de position et donc de points de vue simultanément et la sensation demeure comme devant une scène réelle.

La contrainte de déplacement de l'observateur s'explique alors par le fait que si l'observateur à un oeil dans un lobe et l'autre oeil d'un un lobe voisin, non seulement les images perçues par les deux yeux ne se suivent pas comme c'est le cas lorsque les deux yeux perçoivent des images du même lobe (couple d'images 1-2 ; 2-3 ; 3-4 ; 4-5 ; 5-6 ; 6-7 ; 7-8), mais en plus l'image perçue par l'oeil droit est alors un point de vue plus à gauche que celui perçu par l'oeil gauche ou inversement. En d'autres termes, au passage de lobe, c'est le couple d'image 1-8 qui est perçu. L'écart entre ces deux points de vue est alors beaucoup trop important pour que l'observateur puisse reconstituer le relief dans son cerveau. La sensation produite est tellement inconfortable qu'il est impossible de rester dans cette position sans un sérieux mal de tête immédiat. Le relief est totalement incohérent et inversé, c'est ce que l'on appelle la pseudo-scopie. Il est alors nécessaire de se décaler légèrement vers la droite ou vers la gauche pour retrouver un couple de vues successives.

Les inventeurs ont donc cherché une solution qui permet de libérer totalement les contraintes de déplacement d'un observateur privilégié à la fois dans ses déplacements parallèles à l'écran, mais également dans ses déplacements perpendiculairement à l'écran.

Les documents US 2006/170764 A1, US 2017/127050 A1, EP 2 797 328 A1, US 2011/216171 A1 représentent l'art antérieur.

### 3. Objectifs de l'invention

L'invention vise à fournir un système et un procédé d'affichage autostéréoscopique qui suppriment l'apparition ponctuelle d'images pseudoscopiques.

L'invention vise aussi à fournir, dans au moins un mode de réalisation, un système et un procédé d'affichage autostéréoscopique qui évitent l'apparition d'images fantômes.

L'invention vise aussi à fournir, dans au moins un mode de réalisation de l'invention, un système et un procédé d'affichage autostéréoscopique qui libèrent totalement les déplacements de l'observateur, à la fois parallèlement à l'écran et perpendiculairement à l'écran, tout en maintenant une qualité de l'image perçue par l'observateur.

L'invention vise aussi à fournir un procédé de contrôle de l'affichage sur un écran d'affichage autostéréoscopique équipé d'un dispositif de détection de la position de l'observateur.

### 4. Exposé de l'invention

Pour ce faire, l'invention concerne un procédé d'affichage d'une image autostéréoscopique à 2 points de vue, dits points de vue de l'image, formés chacun d'une pluralité de bandes de sous-pixels, dites bandes images, sur un écran d'affichage autostéréoscopique configuré pour afficher N points de vue, dits points de vue de l'écran, N étant supérieur ou égal à 3, et comprenant une matrice de pixels agencés par lignes et par colonnes, chaque pixel étant composé d'une pluralité de sous-pixels de couleurs différentes, ledit écran d'affichage comprenant un composant optique, du type réseau de lenticules cylindriques ou barrière de parallaxe, configuré pour permettre la projection de deux points de vues de l'écran prédéterminés respectivement à l'oeil droit et à l'oeil gauche d'un observateur privilégié situé à une distance nominale de l'écran, dite distance de teinte plate.

Le procédé selon l'invention comprend en outre les étapes suivantes :

- une étape de détection, à chaque instant, de la position dudit observateur par rapport à un point prédéterminé de l'écran d'affichage, permettant de définir les coordonnées X, Y, Z de l'observateur avec une précision prédéterminée, dans un repère orthonormé dont ledit point prédéterminé de l'écran est l'origine dudit repère, ledit écran définissant les axes X et Y de ce repère et la direction perpendiculaire à l'écran définissant l'axe Z de ce repère,
- une étape de détermination, pour chaque oeil de l'observateur à ladite position détectée, des sous-pixels de l'écran formant des bandes visibles par cet oeil et correspondant à 1/Nème de l'écran total,
- une étape de détermination des sous-pixels de l'écran formant des bandes de l'écran non visibles par aucun des deux yeux de l'observateur à la dite position détectée et correspondant à 1-2/ Nème de l'écran total,
- une étape d'attribution auxdits sous-pixels de chaque bande visible de l'écran, pour chaque oeil de l'observateur à ladite position détectée, des sous-pixels de la bande image correspondante pour cet oeil,
- une étape d'attribution auxdits sous-pixels des bandes non visibles de l'écran par aucun des deux yeux de l'observateur, de sous-pixels correspondants à des points de vue, dits points de vue de sécurité, construits à partir des sous-pixels des bandes images et destinés à adapter l'affichage aux déplacements en X, Y, Z de l'observateur et à compenser ladite précision de détection de ladite position de l'observateur privilégié.

Un procédé selon l'invention prévoit donc d'afficher une image autostéréoscopique qui n'est constituée que de deux images élémentaires pour former uniquement deux points de vue (respectivement pour l'œil droit et l'œil gauche de l'observateur) sur un écran configuré pour afficher au moins 3 points de vues (désigné ci-après écran multipoints de vue). En d'autres termes, l'invention prévoit de détourner l'utilisation d'un écran multipoints de vue (c'est à dire configuré pour afficher au moins 3 points de vue) présentant une configuration prédéterminée connue (notamment la distance de teinte plate physique de l'écran) et de n'y afficher que deux points de vue de manière à pouvoir utiliser les pixels initialement dédiés aux points de vue de l'écran non utilisés, pour y afficher des points de vue de sécurité construits à partir des deux points de vue de l'image. Ces points de vue de sécurité permettent de supprimer les passages de lobe notamment et d'améliorer la qualité d'observation en cas de déplacement de l'observateur par rapport à l'écran (à la fois parallèlement à l'écran et perpendiculairement à l'écran). Ainsi, l'utilisation d'un écran multipoints de vue pour afficher une image à 2 points de vue uniquement permet de masquer les transitions visibles aux endroits de l'écran où se succèdent dans l'image affichée, les zones de pseudoscopie ou d'orthoscopie.

Le procédé prévoit également de détecter la position de l'observateur par un dispositif dédié. Un tel dispositif dédié est désigné dans le texte par les termes de dispositif de détection de la position d'un observateur ou par les termes de dispositif de « tracking », suivant la terminologue anglaise couramment utilisée dans le domaine technique considérée. Les points de vue de sécurité permettent de compenser les erreurs de détection de la position de l'observateur par ce dispositif dédié (à la fois liées au décalage temporel entre la position réelle de l'observateur et la détection de cette position, et à la précision du dispositif de détection en tant que tel).

La position de l'observateur par rapport à l'écran étant connue, les points de vue de l'écran projetés vers chacun des yeux de l'observateur à cette position détecté peuvent être déterminés. Il est donc possible d'affecter à ces points de vue de l'écran connus les points de vue de l'image à projeter, et d'utiliser les points de vue de l'écran non visibles par l'observateur privilégié pour y afficher des points de vue de sécurité qui compensent les erreurs de détection et permettent de masquer les transitions visibles par l'observateur.

En particulier, les portions de l'écran visibles selon la position de l'observateur changent non seulement en cas de déplacement de l'observateur parallèlement à l'écran, mais également en cas de déplacement de l'observateur perpendiculairement à l'écran. Dans le cas d'un déplacement perpendiculaire à l'écran, les portions de l'écran qui permettent de voir les différents points de vue de l'écran semblent grandir ou diminuer en largeur selon le sens du déplacement. Avant et après la distance de teinte plate, l'ordre d'apparition des différents points de vue de l'écran est inverse et à la teinte plate, on ne perçoit qu'un seul point de vue, comme expliqué précédemment.

L'invention permet donc de tenir compte de tous les déplacements de l'observateur pour adapter en permanence l'affichage sur l'écran et supprimer les inconvénients des procédés d'affichage de l'art antérieur.

Les points de vue de sécurité peuvent être formés par une recopie d'un des points de vue de l'image, c'est à dire du point de vue dédié à l'oeil droit ou du point de vue dédié à l'oeil gauche. Par exemple, à la teinte plate et dans le cas d'un écran multipoints de vue configuré pour afficher 8 points de vue, une fois les deux points de vue image attribués à deux points de vue de l'écran qui dépendent de la position de l'observateur, le procédé peut prévoir que les 6 points de vue de sécurité restants affichent 3 fois le point de vue image dédiée à l'oeil droit et trois fois le point de vue image dédié à l'oeil gauche.

Avantageusement et selon l'invention, le procédé comprend une étape de calcul, pour chaque position détectée et pour au moins un oeil de l'observateur, dit oeil directeur - notamment pour chaque oeil de l'observateur - des bandes de moiré formées à cette position détectée de manière à pouvoir substituer chaque sous-pixel contribuant à former chaque bande de moiré à cette position, par le sous-pixel correspondant de la bande image dédiée à cet oeil, de manière à former une teinte plate simulée, dite fausse teinte plate, à ladite position détectée.

Cette variante avantageuse est particulièrement utile pour adapter rapidement l'affichage à des déplacements de l'observateur perpendiculairement à l'écran. En effet, dès lors que l'observateur s'écarte de la distance de teinte plate (c'est à dire qu'il se rapproche ou s'éloigne de l'écran par rapport à la distance nominale d'observation à laquelle un seul point de vue écran est projeté vers un oeil de l'observateur), des figures de moirés apparaissent sur l'écran. Ces figures de moiré résultent de la superposition du réseau lenticulaires et de matrice de pixels formant l'écran d'affichage. Pour compenser ce phénomène, le procédé selon cette variante de l'invention prévoit de remplacer, pour chaque oeil, chaque bande de moiré par la bande image dédiée à cet oeil. Cela permet de créer une fausse teinte plate à la distance détectée, c'est-à-dire de simuler que l'écran d'affichage et le réseau de lenticules cylindriques sont configurés pour permettre la projection de deux points de vues de l'écran simulé prédéterminés respectivement à l'oeil droit et à l'oeil gauche d'un observateur privilégié situé à cette distance détectée.

Par exemple, si l'on considère un écran à 8 points de vue (autrement dit, N est égal à 8), et que l'on affiche une mire constituée de 8 couleurs différentes sur l'écran associé à un réseau lenticulaire configuré pour que les points de vue écran 1-4, 2-5, etc. soient projetés vers les deux yeux de l'observateur à la distance nominale de 85cm. Dès que l'observateur modifie sa distance à l'écran, il apparaît sur l'écran des bandes de couleurs de plus en plus nombreuses et resserrées. Il est alors possible, en connaissant la position de l'observateur par rapport à l'écran, de remplacer ces bandes de couleurs avec les bandes images dédiées aux yeux de l'observateur, et ce pour chaque oeil. Ainsi, non seulement, on modifie la place relative de transition dans l'ordre initial de succession des points de vue, mais on reconstitue une fausse teinte plate pour compenser le mouvement en Z et le déphasage en X et/ou en Y de l'observateur.

Lorsque les images à afficher sont de type déjà captées ou calculées et non modifiables, alors la prise en compte de la place de l'observateur se fait par déplacement des mêmes pixels initiaux. Si l'on dispose d'un système de calcul 3D relief temps réel, il devient possible, après identification du déplacement de l'observateur, de modifier le contenu à afficher en temps réel et de donner l'illusion d'être dans un volume tridimensionnel intégrant les déplacements en X, Y et Z de l'observateur pour une illusion parfaite.

L'invention selon cette variante comprend donc une étape de détermination des bandes de moiré visibles par chaque oeil de l'observateur à chaque position détectée. Comme indiqué précédemment, ces bandes de moiré résultent

EP 3 688 518 B1

de la superposition du réseau lenticulaires et de la matrice de pixels formant l'écran d'affichage et dépendent donc de l'écran d'affichage considéré et du réseau de lenticules cylindriques considéré. Ainsi, la connaissance du pas du réseau de lenticules cylindriques, du pas de perçage (plus connu sous la dénomination anglaise de *pitch*) de l'écran d'affichage, de la taille de l'écran, de la distance de teinte plate de cet ensemble formé de l'écran et du réseau de lenticules cylindriques, et de l'angle des lenticules cylindriques par rapport aux colonnes de l'écran, permet de calculer les bandes de moiré visibles à chaque distance d'observation. Ainsi, lorsque l'observateur se déplace en X, Y et Z, seul le calcul des bandes de moiré est nécessaire pour compenser ce déplacement et cela pour toute la hauteur de l'image et toute sa largeur.

En outre, le procédé s'applique de la même manière pour tous les écrans d'une même taille, d'une même résolution, d'un même nombre de points de vue et de la même teinte plate. En d'autres termes, il suffit de déterminer l'équation de moirés associée à un écran spécifique pour pouvoir mettre en oeuvre le procédé selon l'invention avec tous les écrans quelque soit le numéro de série de l'écran choisi dans sa catégorie. Aucun calcul de lancer de rayon n'est nécessaire avec un procédé selon l'invention, ce qui simplifie très significativement les étapes de mises en oeuvre d'un procédé selon l'invention.

Avantageusement et selon l'invention, le procédé comprend, pour chaque position, une étape de calcul d'un déphasage entre les deux yeux de l'observateur de manière à pouvoir déterminer lesdites bandes de moirés visibles par l'oeil complémentaire de l'oeil directeur, à partir du calcul des bandes de moiré de l'oeil directeur et du déphasage calculée.

Cette variante avantageuse permet de tenir compte du déphasage qui existe entre les deux yeux de l'observateur. En particulier, si l'on considère un oeil de l'observateur (par exemple son oeil droit) qui se déplace en Z en restant centré sur le milieu d'un point de vue de l'écran, alors son oeil gauche, selon la distance de l'observateur à l'écran, va traverser successivement les autres points de vue de l'écran, en position de phase et d'opposition de phase. Le déphasage entre les eux yeux de l'observateur dépend de la distance de l'observateur par rapport à l'écran.

Selon une autre variante, chaque oeil de l'observateur est suivi par le dispositif de tracking (ou par un dispositif dédié à chaque oeil) de sorte que les bandes de moiré sont déterminées à partir de la position détectée de chacun des deux yeux.

Selon une variante de l'invention, au moins un point de vue de sécurité est formé à partir d'un mélange des bandes images qui est constitué par l'addition au premier point de vue image d'un pourcentage en négatif du second point de vue image.

En d'autres termes, au moins un point de vue de sécurité est formé en soustrayant au premier point de vue image un pourcentage prédéterminé en négatif de l'autre point de vue image.

Cela permet d'annuler l'apparition d'une image fantôme. En particulier, profitant de l'existence de points de vue de sécurité, en principe non visibles par l'utilisateur, mais néanmoins projetés dans son champs de vision en pratique étant donné que les détecteurs de position ne permettent pas de fournir des mesures de position instantanées et totalement précises, le procédé prévoit selon cette variante, de modifier l'image qui y est affichée en soustrayant un certain pourcentage en négatif de l'autre point de vue afin d'annuler l'image fantôme qui s'y trouve et qui est toujours un certain pourcentage positif de l'autre point de vue juxtaposé. Les deux images, le fantôme dû aux imperfections du système physique (principalement optique réfractif et diffusion résiduelle) et l'anti fantôme ajusté (calcul informatique, après calibration, de l'image négative en intensité équivalente à soustraire à ladite image principale) s'annulent ainsi l'un à l'autre.

Il faut comprendre que la gestion des points de vue de sécurité (composés d'un seul point de vue écran à la distance de la teinte plate et de bandes plus ou moins larges partout ailleurs) dépend de la position de l'observateur par rapport à l'écran étant donné que c'est la position de l'observateur qui définit quels points de vue écran sont visibles par l'observateur et donc, c'est la position de l'observateur qui conditionne la construction des points de vue de sécurité en fonction des objectifs visés (suppression des images fantômes, suppressions des images pseudoscopiques, etc.)

Selon une variante de l'invention, les points de vue de sécurité peuvent également être utilisés pour afficher des points de vue images dédiés à un deuxième observateur privilégié dont la position par rapport à l'écran est déterminée par un autre dispositif de tracking dédié. Cette variante n'est possible que si N est supérieur ou égal à 4.

Avantageusement et selon l'invention, l'écran d'affichage est un écran à sept points de vue configuré pour que les points de vues visibles par les yeux de l'observateur privilégié à ladite distance de la teinte plate soient des points de vues de l'écran séparés l'un de l'autre de 2 points de vues, de sorte que les couples visibles sont les vues 1-4, 2-5, 3-7 pour des points de vues numérotés successivement de 1 à 7.

Cette variante permet de maintenir deux points de vue disponibles entre les deux yeux de l'observateur à la distance de la teinte plate, ce qui facilite la gestion de l'affichage en cas de déplacement de l'observateur perpendiculairement à l'écran. En effet, étant donné que l'observateur privilégié voit des bases stéréoscopiques qui varient en fonction de ses déplacements en Z, il est pertinent de disposer d'au moins deux points de vue disponibles à la distance de la teinte plate pour offrir une grande liberté de mouvement à l'observateur privilégié sans risque de perdre en qualité d'observation. Bien entendu, d'autres configurations sont également possibles sans que cela ne modifie sensiblement l'effet procuré par l'invention.

L'invention concerne également un procédé de contrôle de l'affichage sur un écran (E) d'affichage autostéréoscopique à N points de vue, N étant supérieur ou égale à 3, associé à un dispositif de détection de la position d'un observateur privilégié devant cet écran, comprenant :

- une étape de détection de la position de l'observateur par ledit dispositif de détection permettant de définir une présence de l'observateur dans une zone de présence parmi au moins trois zones de présence prédéterminées délimitant l'espace devant l'écran,
- une étape d'affichage d'une image autostéréoscopique à 2 points de vue par la mise en oeuvre du procédé d'affichage selon l'invention, si ledit observateur est dans une première zone de présence prédéterminée,
- une étape d'affichage d'une image autostéréoscopique à N points de vue si ledit observateur est dans une deuxième zone de présence prédéterminée,
- une étape d'affichage d'une image en deux dimensions formée par l'affichage d'une image unique sur chacun des points de vue de l'écran, si ledit observateur est dans une troisième zone de présence prédéterminée.

Un procédé de contrôle selon l'invention permet d'adapter le mode d'affichage (c'est à dire le contenu affiché et la manière dont ce contenu est affiché) sur un écran d'affichage autostéréoscopique en fonction de la zone de présence dans laquelle se trouve l'observateur privilégié. Le procédé selon l'invention prévoit au moins trois modes d'affichage distincts pour au moins trois zones de présence prédéterminées (une première zone de présence, une deuxième zone de présence et une troisième zone de présence). En particulier, le procédé de contrôle permet de localiser l'observateur prédéterminé dans une zone parmi au moins trois zones prédéterminées (qui sont avantageusement définies par des intervalles de distance par rapport à l'écran) et de définir un type d'affichage (à la fois en ce qui concerne le contenu affichée et la manière dont ce contenu est affichées sur l'écran) pour chaque zone. Un procédé de contrôle selon l'invention permet donc d'adapter l'affichage aux déplacements de l'observateur en prévoyant une manière d'afficher le contenu de l'image pour chaque zone, y compris en cas de perte du tracking ou de déplacements de l'observateur très éloignés ou très proches de l'écran par rapport à sa distance d'utilisation nominale.

Par exemple, si l'observateur s'éloigne de l'écran de sorte que le dispositif de tracking n'est plus opérationnel (avantageusement, ladite deuxième zone de présence correspond à une zone pour laquelle ledit dispositif de détection ne permet pas de fournir une position de l'observateur), le procédé commande un affichage autostéréoscopique à N points de vue. En d'autres termes, si le dispositif de détection ne permet pas de détecter la présence de l'observateur dans la première ou la troisième zone de présence, c'est qu'il est dans la deuxième zone de présence prédéterminée. Dans ce cas, le procédé commande l'affichage d'une image autostéréoscopique à N points de vue.

Si la présence de l'observateur est décelée dans ladite première zone (c'est à dire à bonne distance de l'écran pour utiliser le dispositif de tracking et détecter la position des deux yeux de l'observateur), le procédé met en oeuvre le procédé d'affichage d'une image autostéréoscopique à 2 points de vue sur l'écran d'affichage autostéréoscopique à N points de vue selon l'invention.

Si l'observateur n'est présent dans aucune des deux zones précédemment mentionnées (formant ladite troisième zone), il commande un affichage de sécurité qui consiste à afficher une image plate en deux dimensions. Cette image est formée par l'affichage de la même image pour les deux yeux sur chacun des N points de vue de l'écran.

Il convient de noter que dans le cas où la présence de l'observateur est décelée dans cette troisième zone, le dispositif de tracking peut permettre de détecter la tête de l'observateur, auquel cas le procédé peut adapter l'affichage de l'image plate en fonction des déplacements de l'observateur, ce qui permet une interaction entre l'observateur et l'image, y compris dans cette troisième zone.

Dans le cas où l'observateur est dans la première zone dans laquelle le dispositif de tracking est totalement opérationnel, le procédé affiche une image à 2 points de vue sur l'écran à N points de vue. L'affichage et le contenu de l'image peuvent être modifiés en fonction des déplacements de l'observateur. Si le contenu est un contenu 3D temps réel, le contenu affiché peut être modifié en fonction des déplacements de l'observateur. Si le contenu est un contenu préenregistré, l'affichage de ce contenu peut être modifié en fonction des déplacements de l'observateur.

En outre, l'invention permet l'utilisation d'un écran multipoints de vue sans dispositif de tracking, initialement prévue pour avoir une teinte plate à une distance D d'observation, en condition standard d'observation des couples de points de vue 1-2; 2-3 ; 3-4 ; 4-5 etc. et d'utiliser ce même écran avec un dispositif de tracking à une distance de teinte plate simulée correspondant par exemple à D/3, en condition d'observation des couples 1-4 ; 2-5 ; 3-6 etc. Dans ces conditions, le même écran peut servir aux deux usages : quand on est assez loin de l'écran, on y affiche des images multipoints de vue et lorsque l'on est plus prêt, à une distance d'usage avec tracking (c'est à dire si la distance détectée se situe dans un intervalle prédéterminé de distances d'observation), et pour une seule personne à la fois, on crée une teinte plate simulée à D/3 et l'ensemble du dispositif reste cohérent et maîtrisé pour ce nouvel usage.

En d'autres termes, le procédé de contrôle de l'écran d'affichage selon l'invention permet de basculer d'un affichage à N points de vue sur un écran configuré pour afficher N points de vue à un affichage à deux points de vue sur ce même écran configuré pour afficher N points de vue dès que l'observateur entre ou quitte, par ses déplacements par rapport à l'écran, une zone prédéterminée permettant sa détection par le dispositif de détection. Enfin, le procédé permet l'affichage d'une image en 2 dimensions lorsqu'aucun autre affichage n'est possible.

L'invention concerne également un système d'affichage d'une image autostéréoscopique à 2 points de vue, dits points de vue de l'image, formés chacun d'une pluralité de bandes de sous-pixels, dites bandes images, sur un écran d'affichage autostéréoscopique configuré pour afficher N points de vue, dits points de vue de l'écran, N étant supérieur ou égal à 3, ledit système comprenant :

- un écran d'affichage autostéréoscopique à N points de vue comprenant une matrice de pixels agencés par lignes et par colonnes, chaque pixel étant composé d'une pluralité de sous-pixels de couleurs différentes, ledit écran d'affichage étant surmonté d'un réseau de lenticules cylindriques configuré pour permettre la projection de deux points de vues de l'écran prédéterminés respectivement à l'oeil droit et à l'oeil gauche d'un observateur privilégié situé à une distance nominal de l'écran, dite distance de teinte plate,
- un dispositif de détection, à chaque instant, de la position dudit observateur privilégié par rapport à un point prédéterminé dudit l'écran d'affichage, permettant de définir les coordonnées X, Y, Z de l'observateur avec une précision prédéterminée, dans un repère orthonormé dont ledit point prédéterminé de l'écran est l'origine dudit repère, ledit écran définissant les axes X et Y de ce repère et la direction perpendiculaire à l'écran définissant l'axe Z de ce repère,
- un module de détermination, pour chaque oeil de l'observateur, à ladite position détectée, des sous-pixels de l'écran formant des bandes visibles par cet oeil et formant $1/N^{ème}$ de l'écran total,
- un module de détermination, pour chaque oeil de l'observateur, à ladite position détectée, des sous-pixels de l'écran formant des bandes de l'écran non visibles par aucun des deux yeux de l'observateur et correspondant à $1-2/N^{ème}$ de l'écran total,
- un module d'attribution auxdits sous-pixels de chaque bande visible de l'écran, pour chaque oeil de l'observateur à ladite position détectée, des sous-pixels de la bande correspondante de chacun des deux points de vue image,
- un module d'attribution, auxdits sous-pixels des bandes non visibles de l'écran, de sous-pixels correspondants à des points de vue, dits points de vue de sécurité, construits à partir des sous-pixels des points de vue image et destinés à compenser ladite précision de détection de ladite position de l'observateur privilégié.

Un système selon l'invention met avantageusement en oeuvre un procédé selon l'invention et un procédé selon l'invention est avantageusement mis en oeuvre par un dispositif selon l'invention. Aussi, les avantages et effets du procédé selon l'invention s'appliquent au système d'affichage selon l'invention.

Le dispositif de détection de la position de l'observateur privilégié peut être de tous types. Par exemple, il peut s'agir d'un dispositif comprenant un émetteur de signaux radiofréquences porté par l'observateur coopérant avec des récepteurs de localisation solidaires de l'écran. Il peut également s'agir d'un capteur de détection et de reconnaissance des mouvements des yeux de l'observateur monté sur l'écran ou au voisinage de l'écran d'affichage. D'une manière générale, il peut s'agir de tous types de moyens configurés pour détecter la position des yeux ou de la tête de l'observateur par rapport à l'écran d'affichage.

Le système selon l'invention comprend également un module de détermination des bandes de l'écran visible par l'observateur et un module de détermination des bandes non visibles par l'observateur. Il comprend également un module d'attribution aux sous-pixels des bandes visible de l'écran des sous-pixels de la bande image correspondante et un module d'attribution auxdits sous-pixels des bandes non visibles de l'écran de sous-pixels correspondants à des points de sécurité destinés à compenser la faible précision de détection de la position de l'observateur privilégié.

Dans tout le texte, on entend par module, un élément logiciel, un sous-ensemble d'un programme logiciel, pouvant être compilé séparément, soit pour une utilisation indépendante, soit pour être assemblé avec d'autres modules d'un programme, ou un élément matériel, ou une combinaison d'un élément matériel et d'un sous-programme logiciel.

De préférence, les modules du système selon l'invention sont des sous-ensembles d'un programme logiciel destiné à être exécuté par un ordinateur ou par un microprocesseur relié à l'écran d'affichage.

Les applications d'un système et d'un procédé selon l'invention sont nombreuses et variées.

Dans le domaine de l'automobile, les compteurs mais aussi les systèmes tête haute, plus connue sous l'acronyme anglais HUD pour *Head-Up Display* peuvent mettre en oeuvre l'invention, ce qui permet d'afficher directement dans l'environnement de conduite, de façon crédible et réaliste, des informations utiles à la conduite et à la sécurité. La grande profondeur de champ et la maîtrise de la collimation permettent de surimposer pour un observateur privilégié, le conducteur, dont on connaît la position des deux yeux à chaque instant, des informations au bon endroit devant le véhicule, sur la route et un peu au dessus, aux vraies distances et selon la bonne perspective.

Dans le domaine médical, l'invention permet de fournir une image d'un endoscope stéréoscopique. Le fait de n'utiliser que deux points de vue obtenus par l'endoscope stéréoscopique, évite d'imposer de longues et coûteuses procédures de certification du système si l'on devait créer des points additionnels déduits des deux points de vue délivrés initialement par l'endoscope. L'observateur privilégié, le chirurgien, peut bénéficier d'une image en relief sans lunettes avec une qualité native.

D'autres applications sont envisageables, comme les écrans individuels de projection dans les avions. La possibilité de pouvoir être très proche de l'écran permet aussi d'y associer une dalle tactile ou un système d'interaction sans contact pour une interaction rapide avec le contenu. Ce dernier pourrait même être le système de tracking principal.

Dans le domaine des jeux vidéos, l'invention permet de montrer de la 3D en temps réel et s'applique aussi bien aux jeux d'arcade, aux machines à sous, etc.

Il est également possible de concevoir des tablettes tactiles ou des téléphones portables, à usage individuel par nature, pour y afficher tous types de contenus vidéo.

L'invention concerne également un procédé d'affichage et un système d'affichage caractérisés en combinaison par tout ou partie des caractéristiques mentionnées ci-dessus ou ci-après.

## 5. Liste des figures

D'autres buts, caractéristiques et avantages de l'invention apparaîtront à la lecture de la description suivante donnée à titre uniquement non limitatif et qui se réfère aux figures annexées dans lesquelles :

- la figure 1 est une vue schématique illustrant le parcours des rayons lumineux émis par un écran d'affichage autostéréoscopique à destination d'un oeil d'un observateur,
- la figure 2 est une vue schématique illustrant le changement de perception pour un oeil d'un observateur à la distance de teinte plate,
- la figure 3 est une vue schématique illustrant le changement de perception pour un oeil d'un observateur lorsqu'il se rapproche de l'écran d'affichage,
- la figure 4 est une vue schématique d'un procédé d'affichage selon un mode de réalisation de l'invention,
- la figure 5 est une vue schématique des étapes d'attribution d'un procédé selon un mode de réalisation de l'invention,
- la figure 6 est une vue schématique illustrant le déphasage entre les yeux d'un observateur privilégié lors d'un déplacement vers l'écran d'affichage,
- la figure 7 est une vue schématique illustrant le principe du calcul des bandes de moiré mis en oeuvre par le procédé selon l'invention,
- la figure 8 est une vue schématique d'un système d'affichage d'une image autostéréoscopique selon un mode de réalisation de l'invention.

## 6. Description détaillée d'un mode de réalisation de l'invention

Sur les figures, les échelles et les proportions ne sont pas strictement respectées et ce, à des fins d'illustration et de clarté. Sur toutes les figures, l'information contenue par un point de vue de l'écran est schématisée par des hachures. Des hachures différentes illustrent des points de vue de l'écran différents.

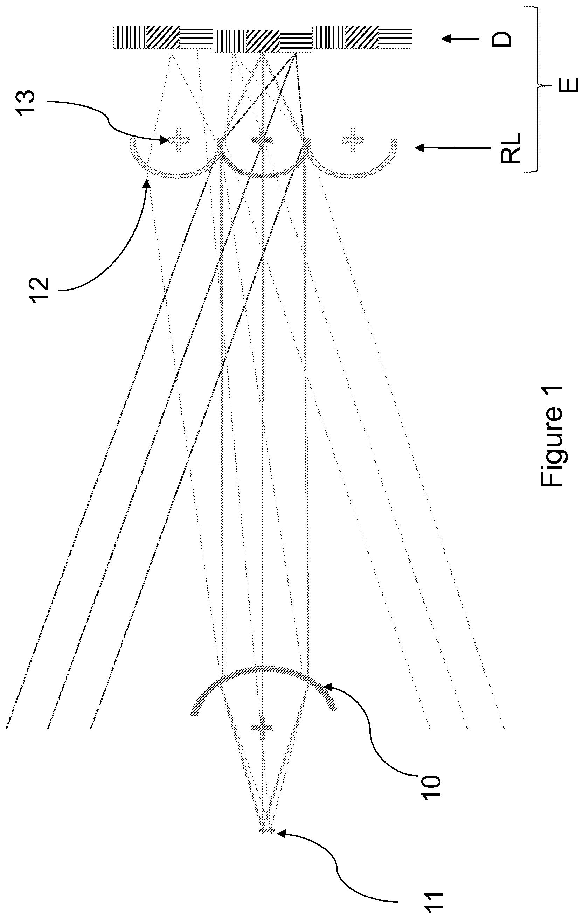

La figure 1 illustre schématiquement le parcours des rayons lumineux depuis une dalle de pixels D d'un écran E d'affichage autostéréoscopique jusqu'à la pupille 10 d'un observateur. Ces rayons lumineux sont déviés par un dispositif optique, du type réseau lenticulaires RL, pour converger vers la pupille 10 d'un observateur. L'écran E d'affichage autostéréoscopique de la figure 1 comprend trois points de vue écran représentés schématiquement par trois types de hachures différentes (des hachures horizontales, des hachures inclinées et des hachures verticales). Chaque lentille 12 du réseau de lenticulaires couvre un ensemble de pixels des trois points de vue. Sur la figure 1, l'observateur est situé à la distance de teinte plate de l'écran et le point de vue aux hachures inclinées est projeté vers l'oeil de l'observateur. Le même phénomène se produit pour l'autre oeil de l'observateur, de sorte qu'à la distance de teinte plate, chaque oeil de l'observateur perçoit un point de vue différent d'une même scène, ce qui génère une impression de relief dans le cerveau de l'observateur.

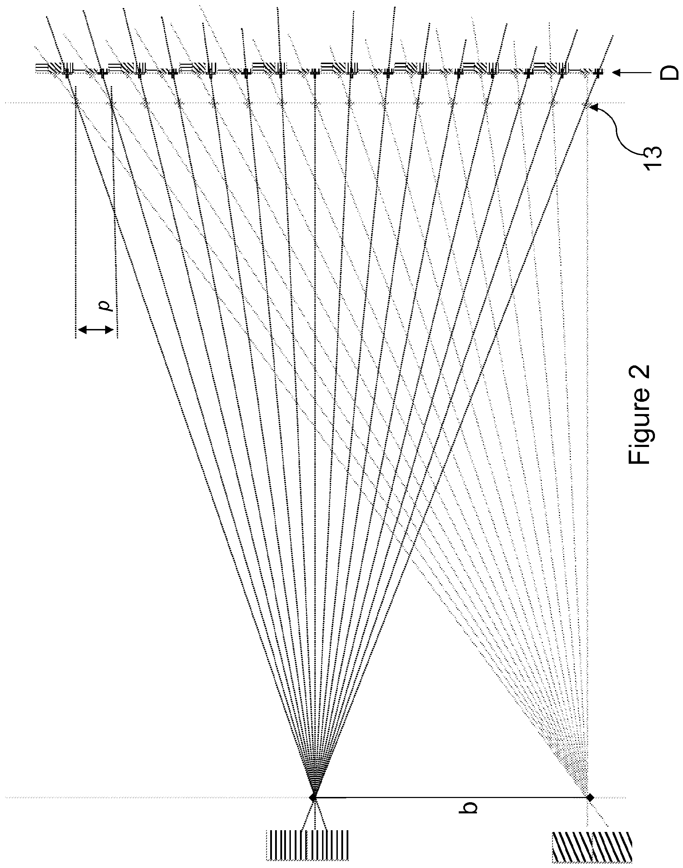

La figure 2 illustre schématiquement ce qui se passe pour un oeil de l'observateur, lorsqu'il se déplace d'une distance prédéterminée, dite base stéréoscopique et représentée par la lettre $b$, parallèlement à l'écran d'affichage autostéréoscopique. Cette base stéréoscopique est une caractéristique intrinsèque de l'écran d'affichage qui dépend de la dalle de pixels D utilisée, du réseau lenticulaires RL utilisé et notamment de son pas $p$. Sur cette figure, le réseau lenticulaire est uniquement représenté par les centres optiques 13 des lentilles. Lorsqu'un oeil de l'observateur se trouve à la position représentée en bas et à gauche de la figure, il perçoit les pixels du point de vue aux hachures inclinées. En d'autres termes, tous les rayons lumineux issus de ce point de vue aux hachures inclinées sont projetés vers l'oeil de l'observateur. Si l'observateur se déplace parallèlement à l'écran de la base stéréoscopique $b$ pour atteindre la position représentée en haut et à gauche de la figure, alors son oeil perçoit maintenant tous les pixels du point de vue adjacent aux hachures horizontales.

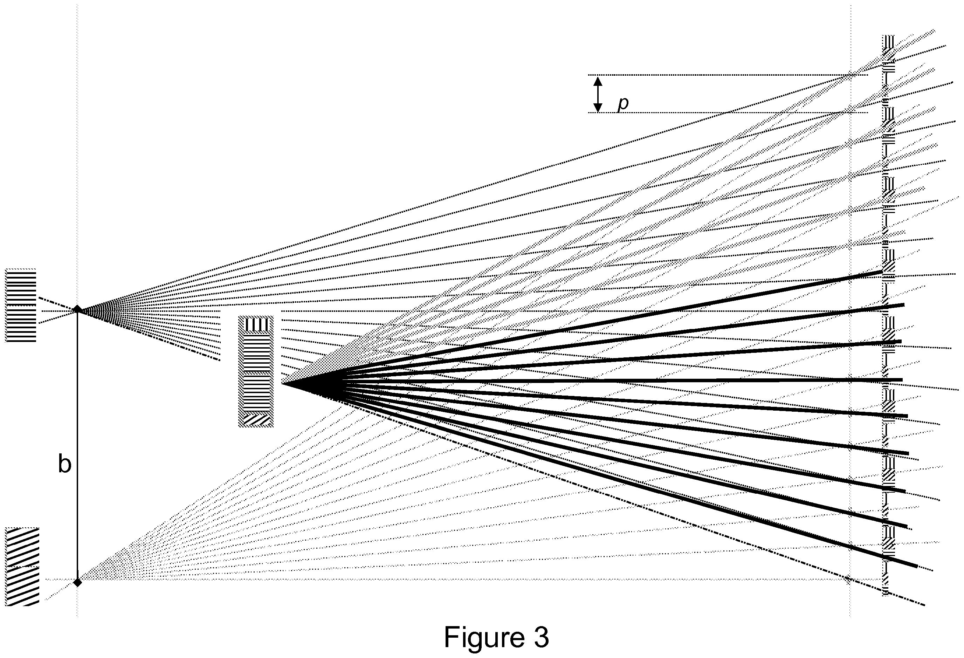

La figure 3 illustre schématiquement ce qui se passe pour un oeil de l'observateur, lorsqu'il se déplace le long d'un axe reliant les points à la teinte plate écartés d'une distance multiple de la base stéréoscopique $b$ et le centre de l'écran. Lors du déplacement de l'oeil de l'observateur perpendiculairement à l'écran, les sous-pixels de l'écran formant des bandes visibles pour cet oeil changent par rapport aux sous-pixels de l'écran visibles à la distance de la teinte plate. On constate en effet que l'oeil perçoit non seulement des sous-pixels issus du point de vue aux hachures horizontales, mais également des sous-pixels du point de vue adjacent aux hachures inclinées.

Plus l'observateur se rapproche de l'écran, et plus son oeil va percevoir des bandes de portions de points de vue de l'écran.

Ainsi, l'invention prévoit d'utiliser un écran d'affichage autostéréoscopique configuré pour afficher N points de vue et de ne l'utiliser que pour afficher deux points de vue image, à destination d'un observateur privilégié.

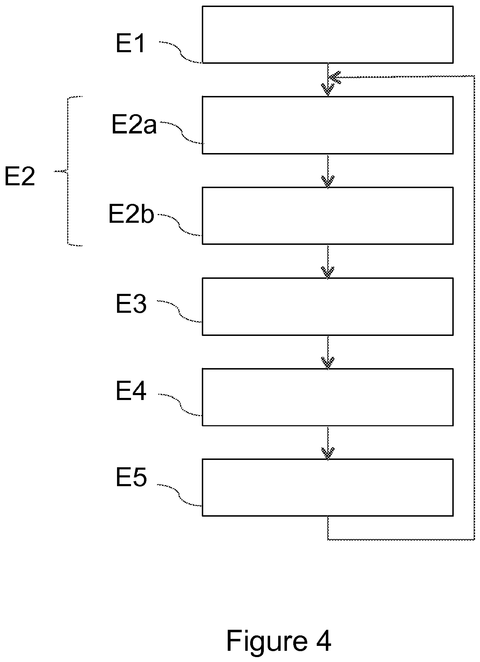

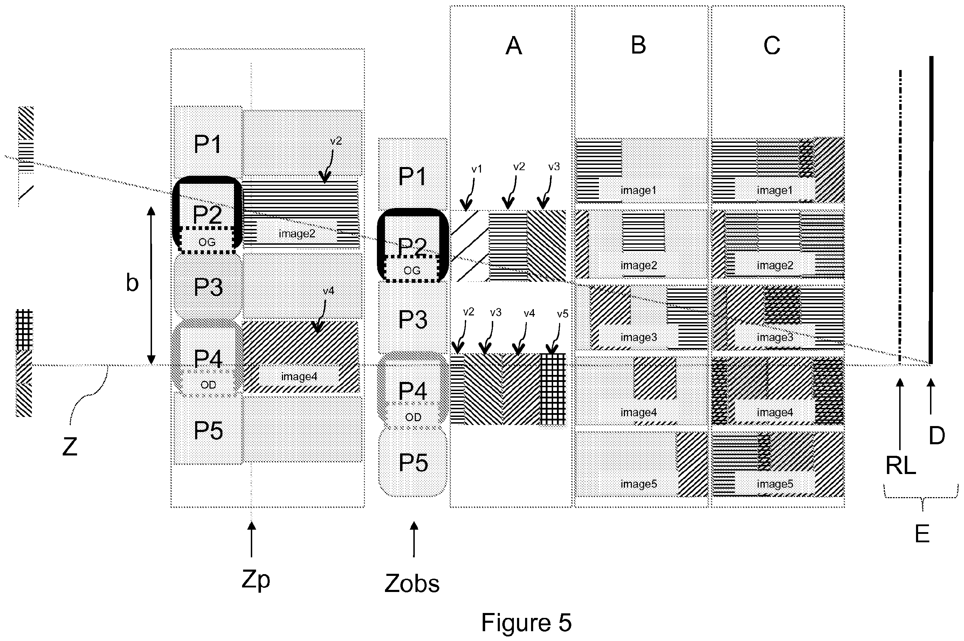

Ce procédé comprend une pluralité d'étapes organisées selon le diagramme schématique de la figure 4 et dont le principe de fonctionnement est illustré sur les figures 5, 6 et 7.

Le procédé comprend une première étape de détection E1, à chaque instant, de la position de l'observateur par rapport à un point prédéterminé de l'écran d'affichage, par exemple le centre de l'écran. Cette détection permet de fournir les coordonnées X, Y, Z de l'observateur dans un repère prédéterminé lié à l'écran E d'affichage.

Le procédé comprend ensuite une étape de détermination E2 pour chaque oeil de l'observateur à cette position détectée, des sous-pixels de l'écran qui forment des bandes visibles par cet oeil. Comme discuté ultérieurement, cette étape E2 de détermination des bandes visibles par cet oeil peut mettre en oeuvre une étape E2a de calcul des bandes de moiré à cette position et une étape de calcul E2b d'un déphasage entre les deux yeux de l'observateur.

Le procédé comprend également une étape de détermination E3 des sous-pixels de l'écran qui forment des bandes de l'écran non visibles par aucun des deux yeux de l'observateur à cette position détectée.

Une fois les bandes visibles et non visibles déterminées à la position détectée de l'observateur, le procédé peut attribuer à chaque sous-pixel de chaque bande visible et non visible les informations nécessaires pour adresser les bandes images dédiées à chaque oeil de l'observateur et construire des points de vue de sécurité destinés à occuper les sous-pixels de l'écran non visibles par l'observateur.

Pour ce faire, le procédé comprend une étape d'attribution E4 aux sous-pixels de chaque bande visible de l'écran, pour chaque oeil de l'observateur à la position détectée, des sous-pixels de la bande image correspondante pour cet oeil et une étape d'attribution E5 aux sous-pixels des bandes non visibles de l'écran par aucun des deux yeux de l'observateur, de sous-pixels correspondants aux points de vue de sécurité, construits à partir des sous-pixels des bandes images et destinés à adapter l'affichage aux déplacements en X, Y, Z de l'observateur et à compenser la précision de détection de la position de l'observateur privilégié.

A l'issue de l'étape E5 ou dès que le dispositif de détection détecte un déplacement de l'observateur, le procédé reprend à l'étape E2 de détermination des bandes visibles à la nouvelle position détectée.

Le principe de fonctionnement des différentes étapes E2, E3, E4 et E5 est schématiquement représenté sur les figures 5, 6 et 7.

Sur les figures, l'axe Z représente l'axe perpendiculaire à l'écran E d'affichage qui permet de mesurer la distance de l'observateur à l'écran d'affichage. La distance Zp représente la distance de teinte plate pour l'écran d'affichage considéré, c'est à dire la distance à laquelle deux points de vue prédéterminés de l'écran sont projetés vers les deux yeux de l'observateur. La distance Zobs représente la distance détectée par un dispositif de tracking dédié. Sur la figure 5, les références P1, P2, P3, P4 et P5 représentent les points de vue de l'écran et l'image représentée dans le cadre à droite de chaque point de vue représente l'image affichée par ce point de vue. Ainsi, à la distance de teinte plate Zp, on considère que l'œil droit OD observe l'image v4 représentée par des hachures inclinées à +45° et l'oeil gauche OG observe l'image v2 représentée par des hachures horizontales.

Lorsque l'observateur se déplace perpendiculairement à l'écran et se retrouve à une distance Zobs, il quitte la distance de teinte plante de sorte qu'il perçoit une pluralité de bandes issues d'une pluralité de points de vue de l'écran. Sur la figure, on considère qu'à la distance Zobs détectée, l'oeil gauche OG devrait percevoir des bandes v1, v2, v3, et l'oeil droit OD des bandes v2, v3, v4, v5. Ceci est représenté dans le cadre référencé A sur la figure 5.

Le procédé permet donc d'attribuer à chaque bande visible, les sous-pixels de la bande image correspondante pour cet oeil. Ceci est représenté dans le cadre référencé B sur la figure 5. Par exemple, si l'on considère l'oeil gauche OG, la bande visible aux hachures inclinées espacées de l'image v1 du point de vue P1 est remplacée par la bande correspondante de l'image dédiée à cet oeil, c'est à dire l'image v2 aux hachures horizontales. La bande centrale de l'image v2 aux hachures horizontales du point de vue v2 conserve la bande correspondante de l'image dédiée à cet oeil. Enfin, la bande visible de l'image v3 aux hachures inclinées à -45° du point de vue P3 est remplacée par la bande correspondante de l'image v2 aux hachures horizontales dédiées à cet oeil. C'est ce qui apparaît sur l'image 3 représentée dans le cadre B. Il faut également attribuer les bandes correspondantes pour l'oeil droit OD. Ainsi, l'image 2 représentée dans le cadre B comprend une bande de gauche dédiée à l'œil droit OD et représentée par les hachures inclinées à +45°. Le procédé permet en répétant ce processus d'attribuer à chaque bande visible par chaque oeil, les bandes correspondantes.

Les images représentées dans le cadre C illustrent l'image affichée par chaque point de vue écran une fois les étapes d'attribution finalisées. Les bandes de chaque point de vue non utilisées pour aucun des deux yeux permettent d'afficher de l'information de sécurité.

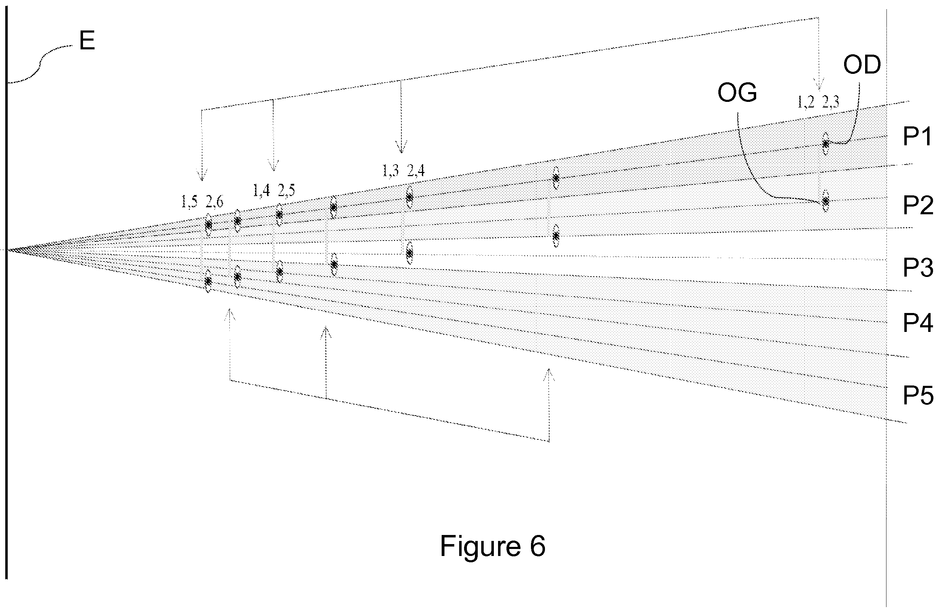

Le décalage que l'on observe sur l'oeil droit OD par rapport à l'oeil gauche OG s'explique par le déphasage entre les deux yeux de l'observateur qui est schématiquement représenté sur la figure 6.

En observant la figure 6, si l'on considère que l'oeil droit OD se déplace en se rapprochant de l'écran E en restant centré sur le milieu du point de vue P1, on constate alors que l'oeil gauche OG, selon la distance de l'utilisateur à l'écran E, traverse successivement les points de vue P2, P3, P4 et P5, en position de phase et d'opposition de phase, et cela en continu. On constate également que l'on passe d'une configuration dans laquelle les deux yeux de l'observateur reçoivent l'information de deux points de vue jointifs (représentés par le couple 1-2 ; 2-3), lorsque l'on est loin de l'écran à des configurations correspondant à des écarts de plus en plus importants. Des couples 1-2 ; 2-3 ; etc., on passe aux couples 1-3 ; 2-4 ; etc., puis aux couples 1-4 ; 2-5, etc., puis aux couples 1-2 ; 2-6, etc.

L'invention permet d'adapter l'affichage à ces changements de couples stéréoscopiques en plaçant systématiquement les transitions là où les yeux ne peuvent pas les voir.

L'invention comprend de préférence une étape de calcul E2a, pour chaque position détectée et pour au moins un oeil de l'observateur (de préférence pour chacun des deux yeux), des bandes de moiré formées à cette position détectée de manière à pouvoir substituer chaque sous-pixel contribuant à former chaque bande de moiré à cette position, par le sous-pixel correspondant de la bande image dédiée à cet oeil. Cela permet de former une teinte plate simulée à cette position détectée.

Le calcul des bandes de moiré permet de retrouver les numéros de vue affichés sur l'écran selon la position X, Y, Z de l'observateur dans le repère lié au centre de l'écran par exemple.

Par exemple, si l'on considère le point en haut de l'écran, centré sur l'horizontal. On détermine le numéro de vue à afficher sur ce pixel selon la position (X, Y, Z) dans le repère lié à ce point.

Pour ce faire, on note *ParVueBaseX* la base stéréoscopique du système en X, c'est à dire la distance à parcourir en X pour changer de point de vue si on est à la distance de teinte plate ; *ParVueBaseY* la base stéréoscopique du système en Y, c'est à dire la distance à parcourir en Y pour changer de point de vue si on est à la distance de teinte plate ; Zp, la distance de la teinte plate ; et X, Y et Z les coordonnées de l'observateur (son oeil droit par exemple) dans le repère lié à l'écran tel que définit précédemment.

On calcul tout d'abord les bases stéréoscopiques simulées à la distance Z par les formules suivantes :

$$ParVueBaseXrect = ParVueBaseX * Z \ / \ Zp$$

$$ParVueBaseYrect = ParVueBaseY * Z \ / \ Zp$$

Ces valeurs correspondent à la normalisation selon la distance de la position détectée en X et Y, de manière a retrouver les angles depuis lesquels les rayons de lumière ayant traversé le réseau lenticulaire arrivent à l'observateur.

On retrouve alors les valeurs de la vue observée sur le point de l'écran en retrouvant déphasage en nombre de vues parcourues selon les positions en X et en Y.

Le décalage globale *Dg* de nombre de vue est égal à

$$Dg = DecalColorOri + X/ParVueBaseXrect + Y/ParVueBaseYrect$$

Dans cette formule, *DecalColorOri* traduit un éventuel décalage d'alignement du système optique avec la dalle lors de la fabrication de l'écran.

L'ensemble des valeurs des différents pixels peut être retrouvé par rapport à ce pixel de référence en prenant en compte la position en X du pixel dont on cherche la valeur par rapport à la lentille (avec son inclinaison), et qui correspond à la répétition des phénomènes le long de ce même axe ; et la position en Z de l'observateur et la position en X du pixel qui définit le décalage en bandes de moirés parcourus.

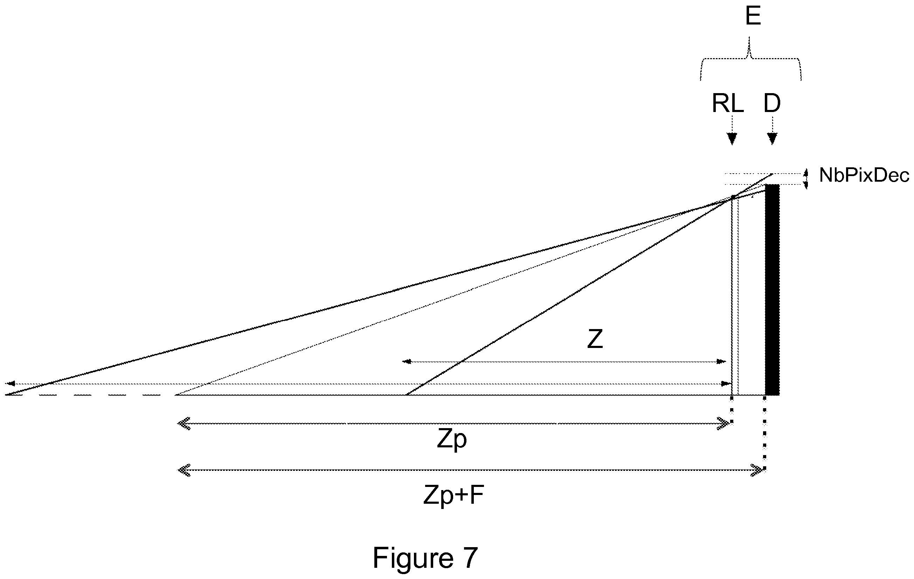

Selon les règles de géométrie de Thalès illustrées schématiquement sur la figure 7, on retrouve alors la largeur des bandes de moiré selon la distance d'observation Z. En effet cette largeur correspond au nombre de pixels *NbPixDec* (en plus ou en moins par rapport au nombre de pixels d'origine) couverts par le réseau lenticulaire à partir de la distance de l'observateur.

Si on note *NbPix* le nombre de pixels sur un demi-écran, on obtient alors la formule suivante :

$$NbPixDec = NbPix * ( \ (Z+Focal)/Z * Zp/(Zp+Focal) -1 \ )$$

Pour retrouver le déphasage en nombre de vue par rapport à la lentille centrale, on ajouter ensuite au déphasage trouvé précédemment la valeur signée du déphasage en sachant que *NbPixDec* peut être négatif si le réseau couvre moins de pixels (si on est plus loin que la teinte plate).

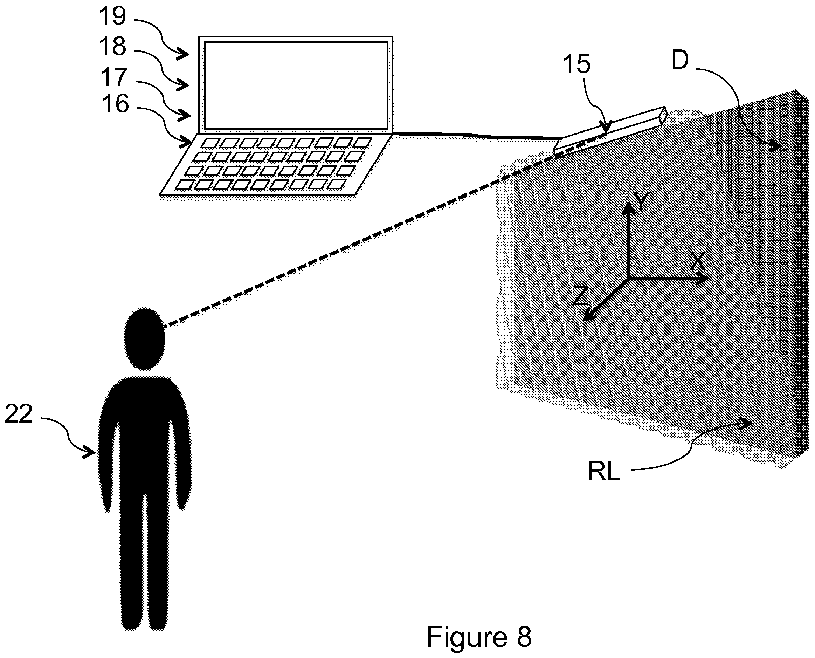

La figure 8 est une vue schématique d'un système d'affichage selon l'invention comprenant un écran E d'affichage autostéréoscopique comprenant une dalle *D* de pixels et un réseau de lenticules cylindriques RL. Le système d'affichage comprend également un dispositif 15 de détection de la position d'un observateur 22 privilégié par rapport à un point prédéterminé de l'écran d'affichage.

Le système comprend également un module 16 de détermination, pour chaque oeil de l'observateur, à ladite position détectée, des sous-pixels de l'écran formant des bandes visibles par cet oeil et formant 1/Nème de l'écran total, un module 17 de détermination, pour chaque oeil de l'observateur, à ladite position détectée, des sous-pixels de l'écran formant des bandes de l'écran non visibles par aucun des deux yeux de l'observateur et correspondant à 1-2/Nème de l'écran total, un module 18 d'attribution auxdits sous-pixels de chaque bande visible de l'écran, pour chaque oeil de l'observateur à ladite position détectée, des sous-pixels de la bande correspondante de chacun des deux points de vue image, et un module 19 d'attribution, auxdits sous-pixels des bandes non visibles de l'écran, de sous-pixels correspondants à des points de vue, dits points de vue de sécurité, construits à partir des sous-pixels des points de vue image et destinés à compenser ladite précision de détection de ladite position de l'observateur privilégié.

Les modules 16, 17, 18, 19 du système sont par exemple des sous-ensembles d'un programme logiciel destiné à être exécuté par un ordinateur ou par un microprocesseur relié à l'écran d'affichage. Cette configuration est représentée schématiquement sur la figure 8. Le logiciel mis en oeuvre par cet ordinateur met également de préférence en oeuvre le module de calcul, de préférence pour chaque oeil de l'observateur 22 pour chaque position détectée des bandes de moiré formées à cette position détectée de manière à pouvoir substituer chaque sous-pixel contribuant à former chaque bande de moiré à cette position, par le sous-pixel correspondant de la bande image dédiée à chaque oeil, de manière à former une fausse teinte plate à la position détectée.

L'invention peut être mise en oeuvre sur tous types d'écran d'affichage autostéréoscopique dont les paramètres sont connus et qui permettent notamment de calculer les bandes de moiré visibles à chaque position détectée par le dispositif de tracking.

## Revendications

**1.** Procédé d'affichage d'une image autostéréoscopique à 2 points de vue, dits points de vue de l'image, formés chacun d'une pluralité de bandes de sous-pixels, dites bandes images, sur un écran (E) d'affichage autostéréoscopique configuré pour afficher N points de vue, dits points de vue de l'écran, N étant supérieur ou égal à 3, et comprenant une matrice (D) de pixels agencés par lignes et par colonnes, chaque pixel étant composé d'une pluralité de sous-pixels de couleurs différentes, ledit écran (E) d'affichage comprenant un composant optique, du type réseau (RL) de lenticules cylindriques ou barrière de parallaxe, configuré pour permettre la projection de deux points de vues de l'écran prédéterminés respectivement à l'oeil droit (OD) et à l'oeil gauche (OG) d'un observateur (22) privilégié situé à une distance nominale de l'écran, dite distance de teinte plate (Zp), ledit procédé comprenant les étapes suivantes :

    - une étape de détection (E1), à chaque instant, de la position dudit observateur par rapport à un point prédéterminé de l'écran (E) d'affichage, permettant de définir les coordonnées X, Y, Z de l'observateur avec une précision prédéterminée, dans un repère orthonormé dont ledit point prédéterminé de l'écran est l'origine dudit repère, ledit écran définissant les axes X et Y de ce repère et la direction perpendiculaire à l'écran définissant l'axe Z de ce repère,
    - une étape de détermination (E2), pour chaque oeil de l'observateur à ladite position détectée, des sous-pixels de l'écran formant des bandes visibles par cet oeil et correspondant à 1/Nème de l'écran total,
    - une étape de détermination (E3) des sous-pixels de l'écran formant des bandes de l'écran non visibles par aucun des deux yeux de l'observateur à la dite position détectée et correspondant à 1-2/ Nème de l'écran total,
    - une étape d'attribution (E4) auxdits sous-pixels de chaque bande visible de l'écran, pour chaque oeil de l'observateur à ladite position détectée, des sous-pixels de la bande image correspondante pour cet oeil,
    - une étape d'attribution (E5) auxdits sous-pixels des bandes non visibles de l'écran par aucun des deux yeux de l'observateur, de sous-pixels correspondants à des points de vue, dits points de vue de sécurité, construits à partir des sous-pixels des bandes images et destinés à adapter l'affichage aux déplacements en X, Y, Z de l'observateur et à compenser ladite précision de détection de ladite position de l'observateur privilégié.

**2.** Procédé selon la revendication 1, **caractérisé en ce qu'**il comprend une étape de calcul (E2a), pour chaque position détectée et pour au moins un oeil de l'observateur, dit oeil directeur, des bandes de moiré formées à cette position détectée de manière à pouvoir substituer chaque sous-pixel contribuant à former chaque bande de moiré à cette position, par le sous-pixel correspondant de la bande image dédiée à cet oeil, de manière à former une teinte plate simulée, dite fausse teinte plate, à ladite position détectée.

3. Procédé selon la revendication 2, **caractérisé en ce qu'**il comprend, pour chaque position, une étape de calcul (E2b) d'un déphasage entre les deux yeux de l'observateur de manière à pouvoir déterminer lesdites bandes de moirés visibles par l'oeil complémentaire de l'oeil directeur, à partir du calcul des bandes de moiré de l'oeil directeur et du déphasage calculée.

4. Procédé selon l'une des revendications 1 à 3, **caractérisé en ce qu'**au moins un point de vue de sécurité est construit à partir d'un mélange des bandes images formé par l'addition au premier point de vue de l'image d'un pourcentage en négatif du point de vue de l'image complémentaire.

5. Procédé selon l'une des revendications 1 à 4, **caractérisé en ce que** ledit écran (E) d'affichage est un écran à sept points de vue configuré pour que les points de vues visibles par les yeux de l'observateur (22) privilégié à ladite distance de la teinte plate (Zp) soient des points de vues de l'écran séparés l'un de l'autre de 2 points de vues, de sorte que les couples visibles sont les vues 1-4, 2-5, 3-7 pour des points de vues numérotés successivement de 1 à 7.

6. Procédé de contrôle de l'affichage sur un écran (E) d'affichage autostéréoscopique à N points de vue, N étant supérieur ou égale à 3, associé à un dispositif de détection de la position d'un observateur privilégié devant cet écran, comprenant :

   - une étape de détection de la position de l'observateur par ledit dispositif de détection permettant de définir une présence de l'observateur dans une zone de présence parmi au moins trois zones de présence prédéterminées délimitant l'espace devant l'écran,
   - une étape d'affichage d'une image autostéréoscopique à 2 points de vue par la mise en oeuvre du procédé d'affichage selon l'une des revendications 1 à 5, si ledit observateur est dans ladite première zone de présence prédéterminée,
   - une étape d'affichage d'une image autostéréoscopique à N points de vue si ledit observateur est dans ladite deuxième zone de présence prédéterminée,
   - une étape d'affichage d'une image en deux dimensions formée par l'affichage d'une image unique sur chacun des N points de vue de l'écran, si ledit observateur est dans une troisième zone de présence prédéterminée.

7. Procédé selon la revendication 6, **caractérisé en ce que** lesdites zones de présence prédéterminées sont définies par des intervalles de distance par rapport à l'écran.

8. Procédé selon l'une des revendication 6 ou 7, **caractérisé en ce que** ladite deuxième zone de présence correspond à une zone pour laquelle ledit dispositif de détection ne permet pas de fournir une position de l'observateur.

9. Système d'affichage d'une image autostéréoscopique à 2 points de vue, dits points de vue de l'image, formés chacun d'une pluralité de bandes de sous-pixels, dites bandes images, sur un écran (E) d'affichage autostéréoscopique configuré pour afficher N points de vue, dits points de vue de l'écran, N étant supérieur ou égal à 3, ledit système comprenant :

   - un écran (E) d'affichage autostéréoscopique à N points de vue comprenant une matrice (D) de pixels agencés par lignes et par colonnes, chaque pixel étant composé d'une pluralité de sous-pixels de couleurs différentes, ledit écran d'affichage comprenant un réseau (RL) de lenticules cylindriques configuré pour permettre la projection de deux points de vues de l'écran prédéterminés respectivement à l'oeil droit (OD) et à l'oeil gauche (OG) d'un observateur (22) privilégié situé à une distance nominal de l'écran, dite distance de teinte plate (Zp),
   - un dispositif de détection (15), configuré pour détecter à chaque instant, la position dudit observateur privilégié (22) par rapport à un point prédéterminé dudit l'écran d'affichage, permettant de définir les coordonnées X, Y, Z de l'observateur avec une précision prédéterminée, dans un repère orthonormé dont ledit point prédéterminé de l'écran est l'origine dudit repère, ledit écran définissant les axes X et Y de ce repère et la direction perpendiculaire à l'écran définissant l'axe Z de ce repère,
   - un premier module de détermination (16), configuré pour déterminer pour chaque oeil de l'observateur, à ladite position détectée, des sous-pixels de l'écran formant des bandes visibles par cet oeil et formant $1/N^{\text{ème}}$ de l'écran total,
   - un deuxième module de détermination (17), configuré pour déterminer pour chaque oeil de l'observateur, à ladite position détectée, des sous-pixels de l'écran formant des bandes de l'écran non visibles par aucun des deux yeux de l'observateur et correspondant à 1-2/N$^{ème}$ de l'écran total,
- un premier module d'attribution (18) configuré pour attribuer auxdits sous-pixels de chaque bande visible de l'écran, pour chaque oeil de l'observateur à ladite position détectée, des sous-pixels de la bande image correspondante de chacun des deux points de vue image,
- un deuxième module d'attribution (19), configuré pour attribuer auxdits sous-pixels des bandes non visibles de l'écran, de sous-pixels correspondants à des points de vue, dits points de vue de sécurité, construits à partir des sous-pixels des points de vue image construits à partir des sous-pixels des bandes images et destinés à compenser ladite précision de détection de ladite position de l'observateur privilégié.

10. Système selon la revendication 9, **caractérisé en ce qu'**il comprend un premier module de calcul, configuré pour calculer pour chaque position détectée et pour au moins un oeil de l'observateur, dit oeil directeur, des bandes de moiré formées à cette position détectée de manière à pouvoir substituer chaque sous-pixel contribuant à former chaque bande de moiré à cette position, par le sous-pixel correspondant de la bande image dédiée à cet oeil, de manière à former une fausse teinte plate à ladite position détectée.

11. Système selon la revendication 10, **caractérisé en ce qu'**il comprend un deuxième module de calcul, configuré pour calculer un déphasage entre les deux yeux de l'observateur de manière à pouvoir déterminer lesdites bandes de moirés visibles par l'oeil complémentaire de l'oeil directeur, à partir du calcul des bandes de moiré de l'oeil directeur et du déphasage calculée.

12. Système selon l'une des revendications 9 à 11 **caractérisé en ce que** ledit écran d'affichage est un écran à sept points de vue configuré pour que les points de vues visibles par les yeux de l'observateur privilégié à ladite distance de la teinte plate sont des points de vues de l'écran séparés l'un de l'autre de 2 points de vues, de sorte que les couples visibles sont les vues 1-4, 2-5, 3-7 pour des points de vues numérotés successivement de 1 à 7.

**Patentansprüche**

1. Verfahren zum Anzeigen eines autostereoskopischen Bildes mit zwei Blickpunkten, als Bild-Blickpunkte bezeichnet, welche jeweils aus mehreren Streifen von Subpixeln gebildet werden, als Bild-Streifen bezeichnet, auf einem autostereoskopischen Anzeigebildschirm (E), der so ausgestaltet ist, dass er N Blickpunkte anzeigt, die Bildschirm-Blickpunkte genannt werden, wobei N größer oder gleich 3 ist, und der eine Matrix (D) von Pixeln umfasst, die in Zeilen und Spalten angeordnet sind, wobei jedes Pixel aus mehreren Subpixeln unterschiedlicher Farben besteht, wobei der Anzeigebildschirm (E) ein optisches Bauteil, wie beispielsweise eine Anordnung (RL) von zylindrischen Linsen oder eine Parallaxensperre, umfasst, das so ausgestaltet ist, dass es die Projektion von zwei bestimmten Bildschirm-Betrachtungspunkten jeweils auf das rechte Auge (OD) und das linke Auge (OG) eines bestimmten Beobachters (22) ermöglicht, der sich in einem Nennabstand vom Bildschirm befindet, der als Vollfarbenabstand (Zp) bezeichnet wird, wobei das Verfahren die folgenden Schritte umfasst:

- einen Schritt (E1) zum Erfassen der Position des Beobachters in Bezug auf einen bestimmten Punkt des Anzeigebildschirms (E) zu jedem Zeitpunkt, wodurch die Koordinaten X, Y, Z des Beobachters mit einer bestimmten Genauigkeit in einem orthonormalen Bezugssystem, in dem der bestimmte Punkt des Bildschirms der Ursprung des Bezugssystems ist, wobei der Bildschirm die X- und Y-Achsen des Bezugssystems definiert und die Richtung senkrecht zum Bildschirm die Z-Achse des Bezugssystems definiert,
- einen Schritt (E2) zum Bestimmen von Subpixeln des Bildschirms für jedes Auge des Beobachters an der erfassten Position, die Streifen bilden, die für dieses Auge sichtbar sind und 1/N$^{tel}$ des gesamten Bildschirms entsprechen,
- einen Schritt (E3) zum Bestimmen von Subpixeln des Bildschirms, die Streifen des Bildschirms bilden, die von keinem der beiden Augen des Betrachters an der erfassten Position sichtbar sind und (N-2)/N$^{-ten}$ des gesamten Bildschirms entsprechen,
- einen Schritt (E4) des Zuordnens von Subpixeln des jeweiligen Bild-Streifens für dieses Auge zu Subpixeln eines jeden sichtbaren Streifens des Bildschirms für jedes Auge des Betrachters an der erfassten Position, ,
- einen Schritt (E5) des Zuordnens von Subpixeln der Streifen des Bildschirms, die von keinem der beiden Augen des Betrachters sichtbar sind, zu den Subpixeln, die den Blickpunkten entsprechen, die als Sicherheitsblickpunkte bezeichnet werden, wobei die Subpixel aus Subpixeln von Bild-Streifen gebildet sind und dazu dienen, die Anzeige an die X-, Y- und Z-Bewegungen des Betrachters anzupassen und die Erfassungsgenauigkeit der Position des bestimmten Betrachters zu kompensieren.

**2.** Verfahren nach Anspruch 1, **dadurch gekennzeichnet, dass** es einen Schritt (E2a) umfasst, bei dem für jede erfasste Position und für mindestens ein Auge des Beobachters, das als Führungsauge bezeichnet wird, Moiré-Streifen berechnet werden, die an der erfassten Position gebildet werden, um jedes Subpixel, das zur Bildung jedes Moiré-Streifens an dieser Position beiträgt, durch das entsprechende Subpixel des Bild-Streifens, der diesem Auge zugeordnet ist, zu ersetzen, so dass an der erfassten Position eine simulierte Volltonfarbe, als falsche Volltonfarbe bezeichnet, gebildet wird.

**3.** Verfahren nach Anspruch 2, **dadurch gekennzeichnet, dass** es für jede Position einen Schritt (E2b) der Berechnung einer Phasenverschiebung zwischen den beiden Augen des Betrachters umfasst, um die Moiré-Streifen, die für das komplementäre Auge des Führungsauges sichtbar sind, aus der Berechnung der Moiré-Streifen des Führungsauges und der berechneten Phasenverschiebung bestimmen zu können.

**4.** Verfahren nach einem der Ansprüche 1 bis 3, **dadurch gekennzeichnet, dass** mindestens ein Sicherheits-Betrachtungspunkt aus einer Mischung von Bild-Streifen erstellt wird, die durch die Addition eines negativen Prozentsatzes des Betrachtungspunkts des komplementären Bildes zum ersten Betrachtungspunkt des Bildes gebildet wird.

**5.** Verfahren nach einem der Ansprüche 1 bis 4, **dadurch gekennzeichnet, dass** der Anzeigebildschirm (E) ein Sieben-Blickwinkel-Bildschirm ist, der so ausgestaltet ist, dass die Blickwinkel, die für die Augen des bestimmten Betrachters (22) in dem Vollfarbenabstand (Zp) sichtbar sind, Bildschirmansichten sind, die voneinander durch zwei Ansichten getrennt sind, so dass die sichtbaren Paare die Ansichten 1-4, 2-5, 3-7 für Ansichten sind, die nachfolgend von 1 bis 7 nummeriert sind.

**6.** Verfahren zur Steuerung der Anzeige von N Ansichtspunkten auf einem autostereoskopischen Anzeigebildschirm (E), wobei N größer oder gleich 3 ist, in Verbindung mit einer Vorrichtung zum Erfassen der Position eines bestimmten Beobachters vor dem Bildschirm, umfassend:

- einen Schritt zum Erfassen der Position des Beobachters durch die Erfassungsvorrichtung, wodurch die Anwesenheit des Beobachters in einer Anwesenheitszone von mindestens drei bestimmten Anwesenheitszonen definiert werden kann, die den Raum vor dem Bildschirm begrenzen,
- einen Schritt zum Anzeigen eines autostereoskopischen Bildes von zwei Blickpunkten durch die Implementierung des Anzeigeverfahrens nach einem der Ansprüche 1 bis 5, wenn sich der Beobachter in der ersten bestimmten Anwesenheitszone befindet,
- einen Schritt zum Anzeigens eines autostereoskopischen Bildes von N Blickpunkten, wenn sich der Beobachter in der zweiten bestimmten Anwesenheitszone befindet,
- einen Schritt des Anzeigens eines zweidimensionalen Bildes, das durch die Anzeige eines einzelnen Bildes auf jedem der N Bildschirm-Blickpunkte gebildet wird, wenn sich der Beobachter in einer dritten bestimmten Anwesenheitszone befindet.

**7.** Verfahren nach Anspruch 6, **dadurch gekennzeichnet, dass** die bestimmten Anwesenheitszonen durch Abstandsintervalle relativ zum Bildschirm definiert sind.

**8.** Verfahren nach einem der Ansprüche 6 oder 7, **dadurch gekennzeichnet, dass** die zweite Anwesenheitszone einer Zone entspricht, für die die Erfassungsvorrichtung keine Angabe der Position des Betrachters ermöglicht.

**9.** System zur Anzeige eines autostereoskopischen Bildes von zwei Blickpunkten, als Bild-Blickpunkte bezeichnet, die jeweils aus mehreren Streifen von Subpixeln, als Bild-Streifen bezeichnet, gebildet werden, auf einem autostereoskopischen Anzeigebildschirm (E), der so ausgestaltet ist, dass er N Blickpunkte, als Bildschirm-Blickpunkte bezeichnet, anzeigt, wobei N größer oder gleich 3 ist, wobei das System Folgendes umfasst:

- einen autostereoskopischen Anzeigebildschirm (E) mit N Blickpunkten, der eine Matrix (D) aus Pixeln umfasst, die in Zeilen und Spalten angeordnet sind, wobei jedes Pixel aus mehreren Subpixeln unterschiedlicher Farben besteht, wobei der Anzeigebildschirm eine Anordnung (RL) aus zylindrischen Linsen umfasst, die so ausgestaltet sind, dass sie die Projektion von zwei vorbestimmten Bildschirmansichten jeweils auf das rechte Auge (OD) und das linke Auge (OG) eines bestimmten Beobachters (22) ermöglichen, der sich in einem Nennabstand vom Bildschirm, als Volltonfarbenabstand (Zp) bezeichnet, befindet.
- eine Vorrichtung (15), die so angepasst ist, dass sie zu jedem Zeitpunkt die Position des bestimmten Beobachters (22) relativ zu einem bestimmten Punkt des Anzeigebildschirms erfasst, wodurch die Koordinaten X, Y, Z des Beobachters mit einer bestimmten Genauigkeit in einem orthonormalen Bezugssystem definiert werden können, in dem der bestimmte Punkt des Bildschirms der Ursprung des Bezugssystems ist, wobei der Bildschirm die X- und Y-Achsen des Bezugssystems definiert und die Richtung senkrecht zum Bildschirm die Z-Achse des Bezugssystems definiert,

- ein erstes Modul (16), das angepasst ist, dass es für jedes Auge des Beobachters an der erfassten Position Subpixel des Bildschirms bestimmt, die Streifen bilden, die von diesem Auge sichtbar sind und 1/N$^{tel}$ des gesamten Bildschirms bilden,

- ein zweites Modul (17), das angepasst ist, dass es für jedes Auge des Betrachters an der erfassten Position Subpixel des Bildschirms bestimmt, die Streifen des Bildschirms bilden, die für keines der beiden Augen des Betrachters sichtbar sind und dem (N-2)/N$^{-ten}$ Teil des gesamten Bildschirms entsprechen,

- ein erstes Modul (18), das angepasst ist, den genannten Subpixeln jedes sichtbaren Streifens des Bildschirms für jedes Auge des Betrachters an der erfassten Position Subpixel des jeweiligen Streifens jedes der beiden Bildbetrachtungspunkte zuzuweisen,

- ein zweites Modul (19), das angepasst ist, den Subpixeln der nicht sichtbaren Streifen des Bildschirms Subpixel zuzuweisen, die den als Sicherheitsstandpunkte bezeichneten Standpunkten entsprechen, die aus Subpixeln von Bildstandpunkten konstruiert sind und dazu bestimmt sind, die Genauigkeit der Erfassung der Position des bestimmten Beobachters zu kompensieren.

10. System nach Anspruch 9, **dadurch gekennzeichnet, dass** es ein erstes Modul umfasst, das angepasst ist, dass es für jede erfasste Position und für mindestens ein Auge des Beobachters, als Führungsauge bezeichnet, Moiré-Streifen berechnet, die an der erfassten Position gebildet werden, um jedes Subpixel, das zur Bildung jedes Moiré-Streifens an dieser Position beiträgt, durch das entsprechende Subpixel des Bild-Streifens, der diesem Auge zugeordnet ist, ersetzen zu können, so dass an der erfassten Position eine falsche Volltonfarbe entsteht.

11. System nach Anspruch 10, **dadurch gekennzeichnet, dass** es ein zweites Modul umfasst, das zur Berechnung einer Phasenverschiebung zwischen den beiden Augen des Betrachters angepasst ist, um die Moiré-Streifen, die durch das komplementäre Auge des Führungsauges sichtbar sind, aus der Berechnung der Moiré-Streifen des Führungsauges und der berechneten Phasenverschiebung bestimmen zu können.

12. System nach einem der Ansprüche 9 bis 11, **dadurch gekennzeichnet, dass** der Anzeigebildschirm ein Sieben-Blickwinkel-Bildschirm ist, der so ausgestaltet ist, dass die Blickwinkel, die von den Augen des bestimmten Beobachters in der bestimmten Entfernung mit Volltonfarbe sichtbar sind, Bildschirm-Blickwinkel sind, die voneinander durch zwei Blickwinkel getrennt sind, so dass die sichtbaren Paare die Ansichten 1-4, 2-5, 3-7 für die Blickwinkel sind, die nachfolgend von 1 bis 7 nummeriert sind.

**Claims**

1. A method of displaying an autostereoscopic image of two viewpoints, called image viewpoints, each formed of a plurality of strips of subpixels, called image strips, on an autostereoscopic display screen (E) configured to display N viewpoints, called screen viewpoints, N being greater than or equal to 3, and comprising a matrix (D) of pixels arranged by lines and columns, each pixel being composed of a plurality of subpixels of different colours, the said display screen (E) comprising an optical component, such as an array (RL) of cylindrical lenticules or parallax barrier, configured to allow the projection of two predetermined screen viewpoints respectively to the right eye (OD) and to the left eye (OG) of a privileged observer (22) located at a nominal distance from the screen, called solid colour distance (Zp), the said method comprising the following steps:

- a step (E1) of detection, at each instant, of the position of the said observer relative to a predetermined point of the display screen (E), enabling the coordinates X, Y, Z of the observer to be defined with a predetermined accuracy, in an orthonormal reference system in which the said predetermined point of the screen is the origin of the said reference system, the said screen defining the X and Y axes of the said reference system and the direction perpendicular to the screen defining the Z axis of the said reference system,

- a step (E2) of determining, for each eye of the observer at the said detected position, subpixels of the screen forming strips visible by that eye and corresponding to 1/N$^{th}$ of the total screen,

- a step (E3) of determining subpixels of the screen forming strips of the screen that are not visible by either of the observer's two eyes at the said detected position and corresponding to (N-2)/N$^{th}$ of the total screen,

- a step (E4) of assigning to the said subpixels of each visible strip of the screen, for each eye of the observer at the said detected position, subpixels of the respective image strip for that eye,

- a step (E5) of assigning to the said subpixels of the strips of the screen not visible by either of the two eyes of the observer, subpixels corresponding to viewpoints, called safety viewpoints, constructed from subpixels of image strips and intended to adapt the display to the X, Y, Z movements of the observer and to compensate for the said accuracy of detection of the said position of the privileged observer.

2. The method according to claim 1, **characterized in that** it comprises a step (E2a) of calculating, for each detected position and for at least one eye of the observer, called director eye, moiré strips formed at that detected position, so as to be able to substitute each subpixel contributing to form each moiré strip at that position, for the corresponding subpixel of the image strip dedicated to that eye, in such a way as to form a simulated solid colour, called false solid colour, at the said detected position.

3. The method according to claim 2, **characterized in that** it comprises, for each position, a step (E2b) of calculating a phase shift between the two eyes of the observer so as to be able to determine the said moiré strips visible by the complementary eye of the director eye, from the calculation of the moiré strips of the director eye and of the calculated phase shift.

4. The method according to any one of claims 1 to 3, **characterized in that** at least one safety viewpoint is constructed from a mixture of image strips that is formed by the addition to the first viewpoint of the image of a negative percentage of the viewpoint of the complementary image.

5. The method according to any one of claims 1 to 4, **characterized in that** the said display screen (E) is a seven-viewpoint screen configured so that the viewpoints visible by the eyes of the privileged observer (22) at the said solid colour distance (Zp) are screen viewpoints separated from each other by two viewpoints, so that the visible pairs are the views 1-4, 2-5, 3-7 for viewpoints numbered successively from 1 to 7.

6. A method of controlling the display on an autostereoscopic display screen (E) of N viewpoints, N being greater than or equal to 3, associated with a device for detecting the position of a privileged observer in front of the said screen, comprising:

- a step of detecting the position of the observer by the said detection device allowing a presence of the observer to be defined in one presence zone from among at least three predetermined presence zones delimiting the space in front of the screen,
- a step of displaying an autostereoscopic image of two viewpoints by the implementation of the display method according to any one of claims 1 to 5, if the said observer is in the said first predetermined presence zone,
- a step of displaying an autostereoscopic image of N viewpoints if the said observer is in the said second predetermined presence zone,
- a step of displaying a two-dimensional image formed by the display of a single image on each of the N screen viewpoints, if the observer is in a third predetermined presence zone.

7. The method according to claim 6, **characterized in that** the said predetermined presence zones are defined by distance intervals relative to the screen.

8. The method according to either one of claims 6 or 7, **characterized in that** the said second presence zone corresponds to a zone for which the said detection device does not enable a position of the observer to be supplied.

9. A display system of an autostereoscopic image of two viewpoints, called image viewpoints, each formed of a plurality of strips of subpixels, called image strips, on an autostereoscopic display screen (E) configured to display N viewpoints, called screen viewpoints, N being greater than or equal to 3, the said system comprising:

- an autostereoscopic display screen (E) of N viewpoints comprising a matrix (D) of pixels arranged in lines and columns, each pixel being composed of a plurality of subpixels of different colours, the said display screen comprising an array (RL) of cylindrical lenticules configured to allow the projection of two predetermined screen viewpoints respectively to the right eye (OD) and the left eye (OG) of a privileged observer (22), located at a nominal distance from the screen, called solid colour distance (Zp).
- a device (15) adapted for detecting, at each instant, the position of the said privileged observer (22), relative to a predetermined point of the display screen, allowing the coordinates X, Y, Z of the observer to be defined with a predetermined accuracy, in an orthonormal reference system in which the said predetermined point of the screen is the origin of the said reference system, the said screen defining the X and Y axes of the said reference system and the direction perpendicular to the screen defining the Z axis of the said reference system,

- a first module (16) adapted for determining, for each eye of the observer at the said detected position, subpixels of the screen forming strips visible by that eye and forming $1/N^{th}$ of the total screen,
- a second module (17) adapted for determining, for each eye of the observer at the said detected position, subpixels of the screen forming strips of the screen that are not visible by either of the observer's two eyes and corresponding to $(N-2)/N^{th}$ of the total screen,
- a first module (18) adapted for assigning to the said subpixels of each visible strip of the screen, for each eye of the observer at the said detected position, subpixels of the respective strip of each of the two image viewpoints,
- a second module (19) adapted for assigning to the said subpixels of the strips not visible of the screen, subpixels corresponding to viewpoints, called safety viewpoints, constructed from subpixels of image viewpoints and intended to compensate for the said accuracy of detection of the said position of the privileged observer.

10. The system according to claim 9, **characterized in that** it comprises a first module adapted for calculating, for each detected position and for at least one eye of the observer, called director eye, moiré strips formed at that detected position so as to be able to substitute each subpixel contributing to form each moiré strip at that position, for the corresponding subpixel of the image strip dedicated to that eye, in such a way as to form a false solid colour at the said detected position.

11. The system according to claim 10, **characterized in that** it comprises a second module adapted for calculating a phase shift between the two eyes of the observer so as to be able to determine the said moiré strips visible by the complementary eye of the director eye, from the calculation of the moiré strips of the director eye and of the calculated phase shift.

12. The system according to any one of claims 9 to 11, **characterized in that** the said display screen is a seven-viewpoint screen configured so that the viewpoints visible by the eyes of the privileged observer at the said solid colour distance are screen viewpoints separated from each other by two viewpoints, so that the visible pairs are the views 1-4, 2-5, 3-7 for viewpoints numbered successively from 1 to 7.

Figure 1

Figure 2

Figure 3

Figure 4

Figure 5

Figure 6

EP 3 688 518 B1

Figure 7

Figure 8

EP 3 688 518 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006024764 A
- WO 2014041504 A
- WO 2013140363 A
- WO 2014016768 A
- US 2006170764 A1
- US 2017127050 A1
- EP 2797328 A1
- US 2011216171 A1